# EUROPEAN PATENT SPECIFICATION

(11) **EP 2 129 498 B1**
(45) Date of publication and mention of the grant of the patent: **23.03.2011**
(21) Application number: 07727551.9
(22) Date of filing: 30.03.2007
(51) Int. Cl.: B25J 9/16, G05B 19/042

(54) **METHOD AND APPARATUS FOR PROGRAMMING AN INDUSTRIAL ROBOT**
VERFAHREN UND VORRICHTUNG ZUR PROGRAMMIERUNG EINES INDUSTRIEROBOTERS
PROCÉDÉ ET APPAREIL DE PROGRAMMATION D'UN ROBOT INDUSTRIEL

(43) Date of publication of application: 09.12.2009
(73) Proprietor: ABB Technology AB, 721 83 Västerås (SE)
(72) Inventor: ADNER, Andreas, S-752 63 Uppsala (SE); WANG, Jackson-Haipeng, Shanghai 201100 (CN); QI, Levi-Liwei, Shanghai 200233 (CN); YIN, Xingguo, Shanghai 201108 (CN)
(74) Representative: Reyier, Ann-Mari
(86) International application number: PCT/EP2007/053079
(87) International publication number: WO 2008/119383

(56) References cited:
- EP-A- 1 724 676
- WO-A-01/69332
- WO-A-2006/043873
- US-A- 4 835 730
- US-A- 5 555 179

## Description

### FIELD OF THE INVENTION

The present invention relates to a method and an apparatus for programming an industrial robot working in a work cell including one or more workstations and the robot is visiting and performing work on the workstations.

The invention is useful for offline programming of any type of industrial application including a robot in a work cell having one or more workstations. For example, the invention is useful for industrial applications in which the robot is tending a machine, such as an injection mold machine, a die casting machine, a metal press machine, or a CNC machine.

### PRIOR ART

Before an industrial robot is put into operation for a certain task, it must be programmed to carry out the task. When programming an industrial robot, a robot language is used. The robot program comprises a series of robot instructions written in the robot language. The use of programming language offers the advantage of greatest flexibility, but also requires that the operator, who is programming the robot, must have knowledge about robot programming and in particular about robot languages of different robots. This necessitates an intensive and expensive training of the operator. However, in the industry it is not always possible to have operators with knowledge about robot programming. Thus, there is a desire to make it possible for operators without any knowledge about programming language to program the robot in a simple and intuitive way.

Robots are usually placed in work cells in order to facilitate the automation of a complex series of actions. The work cell may comprise a number of different workstations and the robot can be programmed to perform different tasks at the different workstations. A workstation is a physical location on which the robot may carry out work. Each predefined workstation represents a real workstation and a defined task to be carried out by the robot at the workstation. Examples of workstations are injection molding machines, die casting machines, scrap stations for throwing away rejected objects, devices for vision control of the object, stations for subsequent treatment of the object and output stations such as conveyors.

There are many problems facing a programmer of an industrial work cell when given the job to program the robot in the work cell. The robot programmer must program the order in which the robot is to visit each of the work stations, program how the I/O signals are to be used to interact with the stations, program how the tool is to be operated at the station, and program all of the robot paths to be used. All of the components can be quite complex, for example, workstations may have different paths depending upon where there are placed in relation to the robot, such as above, below, beside, under etc, the tool may have different capacities for different parts to be handled, the tool can handle multiple parts and may also have combined cooling and coating sprays for preparing a mold just after part removal. Stations may also have complex logic for handling when a door is opened, when a mold is opening, when the robot can start movement and when the mold is still. All of above examples shows that programming of a work cell can be very complex.

The international patent application WO/2006/043873 discloses a system and a method for programming an industrial robot to perform a work cycle including visiting and performing work on a plurality of workstations. The system includes a memory location for storing a set of predefined workstations comprising preprogrammed robot code for controlling the robot so that it carries out the defined task at the workstation, a display device, and a graphical generator. The graphical generator generates graphical interfaces on the display device, displays information about the predefined workstations, and allows a user to select one or more of the predefined workstations and to specify the order in which the robot shall visit the selected workstations. The system includes preprogrammed robot code associated with each station for executing one or more predefined movement paths for the robot for carrying out the task. The movement path, which the robot shall follow during the task, is defined by a sequence of waypoints, in the following denoted targets. It is possible for the programmer to change the position of the targets of the movement path. The programming code is hidden from the user, and the user creates a robot program by interacting with the graphical interface. A robot program generator generates a robot program for performing the work cycle based on the predefined workstations and the received information about selected workstations and the order in which the robot shall visit the workstations.

The described method and system described in WO/2006/043873 makes it possible for a user to create a robot program for a work cell without using any programming code. The method and device is focused on systems for helping the robot programmer to specify the sequence of stations that the robot should visit and to program the targets in the path for each station. A drawback with this solution is that the programmer is limited to the preprogrammed paths for the workstations. For example, it does not solve the problem mentioned above with workstations having different paths depending upon where the workstations are placed in relation to the robot. A further drawback with the state of the art is that the tool logic and station logic are embedded in the preprogrammed robot code, and there is no help for the programmer to work with the preprogrammed robot code, particular in regards to the complexity of the actual stations, tools and logics.

### OBJECTS AND SUMMARY OF THE INVENTION

The object of the present invention is to provide an improved apparatus for programming an industrial robot working in a work cell including one or more workstations, which reduces the above mentioned drawbacks with the prior art.

This object is achieved by an apparatus as defined in claim 1.

Such an apparatus comprises: a memory location for storing preprogrammed robot code comprising program instructions where accommodations for optional parameters are made, and for storing at least one predefined workstation having a plurality of different scenarios, each scenario including a set of parameters defining how the robot will perform work on the workstation, a graphical display and input device adapted to present a graphical user interface displaying a graphical object representing the workstation, displaying information about the scenarios together with the graphical object representing the workstation and allowing the user to select one of the scenarios associated with the workstation, and a robot program generator adapted to generate a robot program based on user selected scenarios and the preprogrammed robot code.

A scenario defines how the robot will perform work on the workstation, for example defines the movement of the robot, how to operate a tool carried by the robot, and logics for the cooperation between the robot and equipment of the workstation. Different scenarios define different ways to perform work on the workstation. Different scenarios can have different movement paths, for example depending upon where the workstation is placed in relation to the robot. Different scenarios can control the tool in different ways, for example in dependence on which type of parts to be handled. Different scenarios can have different logics for handling I/O signals, for example for handling when a door is opened, when a mold is opening, when the robot can start movement or when the mold is still.

The invention makes it possible to beforehand define and create program code for a plurality of possible scenarios for the workstations and allows a programmer to select among the predefined scenarios. The scenarios are displayed together with a graphical object representing the workstation, thereby facilitating the programming for the operator. The programmer does not need to view or edit the program code. The graphical object representing the workstation is, for example, a 2-dimensional object, a 3-dimensional object, or a tree view. The scenarios are displayed as graphical representations illustrating the scenarios, 2-dimensional objects, 3-dimensional objects, or a tree view. Preferably, the graphical representation also contains information on the set of parameters of the scenario.

The invention makes it easy to switch to a new scenario for a workstation, which tends the station differently than the previously selected scenario. The switching is simply made by selecting another scenario, whereby a new robot program is generated based on the stored program code and the parameters of the newly selected scenario. In some cases, it is possible to select more than one scenario for a workstation. The invention allows the programmer to concentrate on the behavior of the robot rather than on the details of the programming logic and instruction. The invention reduces the difficulty of robot programming and saves programming time. The invention increases the flexibility of the programming compared to the prior art.

The preprogrammed robot code comprises one or more instructions written in a robot language where accommodation for optional parameters is made. The optional parameters are, for example, optional targets on a movement path to be followed by the robot when the work is performed and robot tool to be used. The optional parameters may also include input and output signals for the workstation. The optional parameters may also include, but are not limited to, parameters that control if statistics data on production is to be gathered when tending a station. Other uses of the parameters are to specify how error recovery might occur and how the robot should proceed after an error situation. Optionally, each scenario can be provided with its own preprogrammed robot code, or more than one scenario may share the same original preprogrammed code, but have different default parameters. For example, two scenarios may share the same original robot code, but have different default targets in the movement path. It is also possible that scenarios of different workstations share the same robot code. The scenario should point out the preprogrammed robot code to be used for carrying out the scenario. The program generator fills in the parameters in the robot code in dependence on the users choice of scenario.

According to an embodiment of the invention, the preprogrammed robot code includes robot code for performing robot motions, and the scenarios include parameters defining the robot motion. The parameters may include, but is not limited to, positions of targets on the movement path as well as speed data, the possible corner blending and acceleration data for the targets and type of movement.

According to an embodiment of the invention, the preprogrammed robot code includes robot code controlling the logics for the work to be performed, and the scenarios include parameters defining the logics. The parameters may include one or more condition, such as the level of an input signal, which must be fulfilled in order to start or stop a certain action, or output signals to be set if a certain event occurs.

According to an embodiment of the invention, the preprogrammed robot code includes robot code for operating a robot tool, and the scenarios include parameters defining the operation of the tool. The parameters may include the name of the part to be worked on, tool data, tool signals, and process time for part handling.

According to an embodiment of the invention, the preprogrammed robot code includes robot code for gathering process information and the scenarios include parameters defining how the gathering will be done. For example program code to gather statistics on time, parts produced, etc. This embodiment makes it possible to switch between gathering statistics or not. The scenarios may also include robot code for error handling, general calculations and programming operations.

According to an embodiment of the invention, the memory location is adapted for storing a plurality of predefined workstation having a plurality of different scenarios, each scenario including a set of parameters defining how the robot will perform work on the workstation, and said graphical display and input device is adapted to present graphical objects representing the workstations, displaying information about the scenarios together with the graphical object representing the workstation and allowing the user to select one of the scenarios associated with the workstation. Preferably, each of the workstations in the work cell comprises at least one scenario, and graphical objects of each of the workstations in the work cell are displayed together with at least one scenario for each workstation. Thereby, the programmer will have a good overview of the work performed at each workstation, and thus a good overview of the work performed in the whole work cell. The programmer will also have a good overview of the options for reprogramming the work cell.

According to an embodiment of the invention, the graphical user interface is adapted to display the set of parameters together with the scenario and to allow the user to edit the parameters. This embodiment enables the programmer to make changes that affect the robot code without editing the real robot code and thus further increases the flexibility of the programming. As the scenarios are displayed together with the graphical objects of the workstations, the programming is facilitated for the programmer.

According to an embodiment of the invention, each scenario contains a sequence of one or more default actions having default parameters related to how the action is to be carried out, and said graphical user interface displays an illustration of each action together with the scenario and said graphical user interface allows the user to edit the parameters of the actions. According to this embodiment, the program code is organized in scenarios and actions. The scenarios and actions break down the program in user definable terms, and these terms are graphically associated with the workstations, which the robot is to visit. Scenarios and actions provide two layers of organization of the predefined robot code. The actions are displayed to the programmer and possible to edit. The actions are displayed in the form of illustrations. An illustration is, for example, a 2D or 3D graphical object, a text string including information about the actions, or a tree view. Suitably, the illustrations of the actions include default parameters related to how the action is to be carried out, and the graphical user interface allows the user to edit the parameters. This embodiment facilitates for the programmer to make changes in a scenario and further increases the flexibility of the programming.

According to an embodiment of the invention, the graphical user interface allows the user to delete actions of a scenario and to add new actions to the scenario. Actions can be either specific to a specific workstation, or general-purpose and usable for all or many workstations as elements building scenarios. New actions are, for example, created by copying already existing actions and editing them, or selecting from a list of optional actions displayed together with the graphical object of the workstation. This embodiment allows a programmer to create new scenarios by selecting among predefined actions and editing the actions. This embodiment further increases the flexibility of the programming and allows the programmer to add and delete steps of the robot program.

According to an embodiment of the invention, an action is any of a robot motion action including parameters defining a robot motion, a tool action including parameters defining how a robot tool is to be used, a logic action including parameters defining logic for the work to be performed, or a calculation action such as gathering statistics. The preprogrammed robot code is structured into different types of actions, which can be edited separate from each other. Thereby the programming is further facilitated for the programmer.

According to an embodiment of the invention, each scenario contains a set of one or more actions, each action including preprogrammed robot code for performing the action, and said graphical user interface displays an illustration of each action together with the graphical object representing the workstation associated with the scenario, the illustration of the action includes information about the actions, and said graphical user interface allows the user to edit the actions. According to this embodiment, the program code of the scenarios is organized in actions, which are displayed to the programmer and possible to edit. The actions are displayed in the form of illustrations. An illustration is, for example, a graphical object or a text string including information about the actions. Suitably, the information about the actions includes default parameters related to how the action is to be carried out, and the graphical user interface allows the user to edit the parameters. This embodiment enables the programmer to make changes that affect the robot code without editing the real robot code and thus further increases the flexibility of the programming. As the actions are displayed together with the graphical object of the workstation, the programming is facilitated for the programmer.

According to an embodiment of the invention, the graphical user interface allows the user to delete actions of a scenario and to add new actions to the scenario. New actions are, for example, create by copying already existing actions and editing them. This embodiment further increases the flexibility of the programming and allows the programmer to add and delete steps of the robot program.

According to an embodiment of the invention, an action is any of a robot motion action defining a robot motion, a tool action defining how a robot tool is to be used, and a logic action defining logic for the work to be performed, or a calculation action. The preprogrammed robot code is structured into different types of actions, which can be edited separate from each other. Thereby the programming is further facilitated for the programmer.

This object is also achieved by a method as defined in claim 11.

Such a method comprises: storing preprogrammed robot code comprising program instructions where accommodations for optional parameters are made, storing at least one predefined workstation having a plurality of different scenarios, each scenario including a set of parameters defining how the robot will perform work on the workstation, generating a graphical user interface displaying a graphical object representing the workstation, displaying information about the scenarios together with the graphical object representing the workstation, and allowing the user to select one of the scenarios associated with the workstation, receiving information about which scenario the user has selected, and generating a robot program for the work cell based on user selected scenarios and the preprogrammed robot code.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program product directly loadable into the internal memory of a computer or a processor, comprising software code portions for performing the steps of the method according to the appended set of method claims, when the program is run on a computer. The computer program is provided either on a computer-readable medium or through a network, such as the Internet.

According to another aspect of the invention, the object is achieved by a computer readable medium having a program recorded thereon, when the program is to make a computer perform the steps of the method according to the appended set of method claims, and the program is run on the computer.

### BRIEF DESCRIPTION OF THE DRAWINGS

The invention will now be explained more closely by the description of different embodiments of the invention and with reference to the appended figures.
- Fig. 1: shows a block diagram over an apparatus according to an embodiment of the invention.
- Fig. 2: shows an example of a view displayed on the graphical display of the apparatus.
- Fig. 3: shows a flow diagram over a method for programming an industrial robot.

### DETAILED DESCRIPTION OF PREFERRED EMBODIMENTS OF THE INVENTION

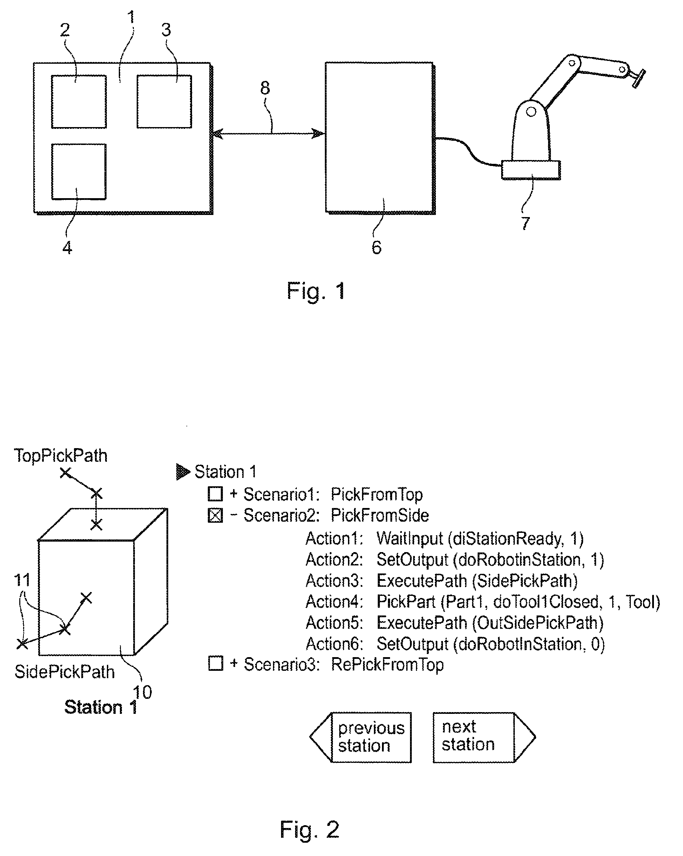

Figure 1 shows a block diagram over an apparatus 1 for programming an industrial robot according to an embodiment of the invention. The apparatus 1 comprises a memory location 2 including a library of predefined workstations and preprogrammed robot code comprising program instructions where accommodations for optional parameters are made. The preprogrammed robot code includes robot code for carrying out work on the workstations in different ways. The library of predefined workstations includes, for each workstation, one or more scenarios defining how the robot will perform work on the workstation. A scenario includes predefined robot code for performing the scenario, or a reference to the predefined robot code, and a set of default parameters for the robot code.

Preferably, each workstation is provided with at least one scenario and at least one of the workstations is provided with more than one scenario. A scenario may include one or more default movement paths to be followed by the robot when performing a predefined task at the workstation. For example, the parameters of the default movement path include target positions, data for speed, type of movement, and robot tool to be used. The parameters may also include default input and output signals for the workstation.

The apparatus 1 further comprises a graphical display and input device 3 having the ability to present graphical objects and receive input from the programmer. The graphical display and input device is adapted to present a graphical user interface displaying graphical objects representing workstations of a work cell. Each workstation in the work cell is represented with a graphical object. The graphical user interface also displays information about scenarios associated with a workstation, together with the graphical object representing the workstation. The graphical user interface allows a user to select one of the scenarios associated with the workstation. The graphical display and input device comprises, for example, a touch screen, which makes it possible for the user to interact with the apparatus via the screen. However, in another embodiment, the graphical display and input device may comprise a graphical display screen and input means, such as a keyboard and a pointing device, for instance a mouse. The apparatus further comprises appropriate data processing means such as are known by a skilled person and will thus not be explained in detail. The apparatus 1 is, for example, a personal computer, or a handheld programming unit for the robot, a so called teach pendant unit (TPU).

The apparatus 1 further comprises a robot program generator 4 adapted to generate a robot program for a work cell based on the set of parameters of the selected scenarios and the preprogrammed robot code pointed out by the scenario. The robot program generator has the ability to receive information from the graphical display and input device 3 and, together with information from the library 2, produce a robot program for the work cell. The program generator is adapted to, for each workstation, fill in the parameters of the selected scenario in the robot code associated with the scenario, and merge the robot code for the workstations to a complete robot program for the whole work cell. The generated robot program is transferred to a controller 6 of an industrial robot 7. In this embodiment, the robot controller 6 is connected to the apparatus 4 by communication means 8. The communication means can be of any type, and can alternatively include a removable media, which is moved from the apparatus 1 to the robot controller 6. The purpose of the communication means is to transfer the robot program to the robot controller.

The organization of the preprogrammed robot code stored in the library 2 is based upon a concept of scenarios and actions. A scenario contains a default set of actions, which describe robot motion, tool methods, logics, and calculations that define how to the robot is to work together with the workstation. At least one of the default actions has one or more default parameters, which can be edited. Thus, an action can be edited with its parameters. The parameters of an action are displayed on the display and input device 3. Based on the default set of actions of a scenario, new actions can be added, and the existing actions can be deleted in case a minimum condition of a scenario is met. By organizing needed actions together, new scenarios can be created. In this way the scenario library can be extended and can be shared among different users to cover more application cases.

Robot programming languages often provide procedures, subroutines and/or function calls to help in the program organization. Scenarios and actions can be implemented as procedure calls, or can be implemented as groupings of predefined robot code, all depending upon the ability of the program generator. So a significant concept is that a scenario and action break down the program in user definable terms and these terms are graphically associated with the workstations, which the robot is to visit. Scenarios and actions provide two layers of organization of the predefined robot code. A single layer is also conceivable where there are only scenarios and no individually selectable actions defined. In addition, actions could also possibly be represented in more detail providing sub actions for the user to select in the graphical environment. There is no upper limit on the number of layers that could be used.

A scenario represents how a robot tends a workstation. In this embodiment there are four types of actions: robot motion actions, tool method actions, actions defining logics for station tending, and actions for performing statistics, such as to gather statistics on time, or parts produced. It is also possible to have other types of actions, such as general calculations and programming operations.

A robot motion action is always connected with a movement path. A path is formed by one or more targets. The targets of the path are regarded as one of the variables for a robot motion action. A scenario includes at least two robot motion actions; one that defines how the robot moves in to the workstation and one that defines how the robot moves out from the workstation. One or more further robot motion actions may exist for a scenario to define how the robot moves inside the workstation.

A tool method action defines how the robot uses a tool in a workstation. Each tool has a default set of tool data and a default set of signals to define tool behavior, such as opening and closing of the tool. For a scenario-based robot programming method, a tool method action is defined from an application point of view, i.e. to use a tool for handling parts. In this sense, a tool method action is always connected with a part. For part handling, the tool method actions can be:
- pick part (s)
- release part (s)
- process part (s)

The part to be worked on by the tool is regarded as a parameter (s) of a tool method action. Accordingly, it is possible for the programmer to select a certain type of part to be worked on by the tool. A tool method action can be fully defined with tool data, tool signals, part name, and process time for part handling.

Optionally, a geometrical model of a workstation can be used to generate targets on a robot path. Similarly, a geometrical model of a tool can be used to generate tool data. For signal handling, alias signals are used as tool signals that can be mapped to real robot signals with cross connections. For a tool method action, what needs to be customized are: tool behavior, part name for a tool action, and process time. A tool method action can only happen within the scope of a scenario, which means a tool method action is a subset of robot behavior when the robot tends a workstation.

Logic actions are used to define the application related conditions between a robot and a workstation. According to the scenario-based robot programming method, each workstation will be defined as a finite state machine. A workstation commonly but not necessarily contains at least two states: tending state and preparing state. More states can exist for a workstation depending on workstation type and application requirement. The finite state machine of a station defines a condition to change from one state to another, including how to start/stop the tending state of a station. The scenario always connects with the tending state of a station. Only the station logics that related to the tending state of the station are considered as logic actions of a scenario. The logic actions typically include: Check Input/Output Condition, Wait Input Condition, Set Output Condition.

Calculation actions are used to perform specific types of calculations when the robot is moving into, out, or working in the station. An example of such calculations is the gathering of production and motion statistics, where an action is used to start and stop timers that calculate motion time, time in handling, or counters for the number of parts produced, inspected, or scrapped.

Actions can be either specific to a specific workstation, or general-purpose and usable for all or many workstations as elements building scenarios. For example, a list of general actions can be displayed together with the graphical object of the workstation, and the user can add actions to the scenario by selecting one or more of the general actions from the list.

In robot applications, such as machine tending, a work cell is formed by a set of workstations and one or more auxiliary device, which has no relation with the robot behavior, such as a cell fence, or a robot base. The organization of different scenarios in a sequence, with one scenario for each workstation, will form a cycle. A cycle defines how a robot tends the workstations within a work cell in an order. A cycle represents a work cell in a cell level. A scenario describes how a robot tends a workstation. Actions within a scenario describe robot motion, tool method, station logics, and calculations that map to executable program.

A work cell includes a plurality of workstations. For each workstation a graphical symbol representing the workstation is displayed on the display and input device. Which workstations are contained in the work cell, and the order the robot will-visit the workstations during a cycle can be defined by the user in the same way as described in WO/2006/043873, or could be preprogrammed. The programmer can choose one station by one of many possible means, as example the user can directly click on the graphical object 10, or one can select the object from a list of stations in the graphical display.

Figure 2 shows an example of a view displayed on the graphical display device. In this example, one workstation is displayed at a time, and a user can view the previous or next workstation in the cycle by clicking on the previous or next station buttons in the view. The user may step through all workstation of the work cell and select a scenario for each workstations having more than one scenario to choose between. In the figure, Station1 has been chosen and Scenario 2 selected as the scenario to be run. The view of figure 2 shows the first workstation of the work cell, called STATION 1, and is represented by a graphical objects 10 displayed together a plurality of selectable scenarios, in this example three scenarios named Scenario 1, Scenario 2, and Scenario 3. The scenarios are displayed together with some information on what type of work the scenarios doing. In this example Scenario 1 is provided with the information Pick From Top, Scenario 2 is provided with the information Pick From Side, and Scenario 3 is provided with the information Pick From Top.

It possible to expand the information of the scenarios, in order to view the actions of the scenario. In the figure, Scenario 2 is expanded and it is revealed that scenario 2 includes six actions named Action 1-6. Each action is provided with information on what the action is doing and variables, which can be edited by the user. In the example shown in the figure, Action 1 is a logic action and is provided with the information WaitInput and has two variables diStationReady and 1. Action 3 is an example of a robot move action and is provided with the information ExecutePath and has a variable SidePickPath. SidePickPath is a robot movement path and is illustrated in the figure in relation to the graphical object representing the workstation. The targets 11 of the side pick path are shown in the view. It is possible for a user to edit the variables displayed together with the actions. It is also possible to edit the targets of the path.

The programmer selects a scenario to be used by the robot in tending the workstation, and can modify the actions in the scenarios if desired. The displayed view can be three-dimensional or two-dimensional, and may use icons for as a graphical representation of the workstations.

One mayor benefit of scenario based robot programming is that switching from a scenario to another for a workstation is easy and fast. Switching scenario for a station means that the robot will tend the station in a different way. For example Scenario 1 for an injection molding machine workstation can be picking a part from the workstation, while scenario 2 can be first putting an insert into the injection molding machine, and then go to the another side of the used mold to pick a molded part. These two scenarios can be as follows:
Scenario-1:
   WaitInput diStationReady (1);
   SetOutput doRobotInStation (1);
   ExecutePath (InPath);
   PickPart (Part1, doTool1Closed, 1, Tool1, 0.5);
   ExecutePath (OutPath);
   SetOutput doRobotInStation(0)
Scenario-2:
   WaitInput diStationReady (1);
   SetOutput doRobotInStation (1);
   ExecutePath (InPath);
   ReleasePart (Insert1 , doTool2Closed, 1, Tool2, 0.5);
   ExecutePath(InsideTravelPath);
   PickPart (Part1, doTool1Closed, 1, Tool1, 1.0);
   MoveOut(OutPath);

Once a new scenario is chosen for a station, the action collection will be changed according to the new scenario with all default values of the parameters. That means that the robot will use the default path when moving inside a station, use default tool to handle default part with default scenario logic. If the default setting of the parameters is not satisfied, it is easy to change all default settings. This is an example of a tool method action:
**PickPart** (Part 1, doTool1Closed, 1, Tool 1, 0,5)

This tool action means that Tool 1 will be used to pick part 1. When Tool 1 starts to pick Part 1, the robot signal doTool1Closed will be changed to high level, and the time for picking the part 1 is 0,5s. Altogether there are five parameters for this action. All those parameters are changeable and thereby allow different tools handle different parts with different signal conditions in a desired time.

Within a scenario, the typical logic structure of the robot code is organized as the follows:
WaitInput action-1;
   Bool Con0 = Check (Input Condition-00);
   If Con0== True
   Wait Input Condition-00;
**SetOutPut action-1**;
   Set Output Condition-01;
Motion action-1;
   Bool Con1 = Check (Input Condition-10);
   If Con1 == True
   Wait Input Condition-10;
   Set Output Condition-11;
Tool action-1;
   Bool Con2 = Check (Input Condition-20);
   If Con2 == True
   Wait Input Condition-20;
   Set Output Condition-21;
Motion action-N
   SetOutput action-2;
   Set Output Condition-22;

The Input Conditions and Output Conditions in the above example of robot code are examples of accommodations for optional logical parameters. An input Condition can be a logic (AND OR NOT) combination of different workstation signals, while an output condition can be defined similar, but with robot signals. Before a robot motion action or a tool method action can be executed, the workstation condition will be checked first. If the station condition is not OK, a WaitInput" logic action will be executed until the condition can be OK, or stop executing in case of a time out. If the start condition is OK, the "SetOutput" logic action will be executed to change related robot signals. The station and cell level state machines can determine if the next action will be executed based on certain signal conditions.

A scenario will always have a robot motion action defining the entry path for the robot, i.e. defining how the robot will enter the work cell, and a robot motion action defining a depart path for the robot, i.e. define how the robot will leave the work cell. Before and between these two motion actions, there can be one or more motion actions, tool actions, logic actions, and calculation actions. The sequence of actions between the first and the last motion action can be different for different scenarios. Only the items in bold in the above described example need to be exposed for editing, and each of such items has default set of instructions with default values of parameters which are exposed for editing.

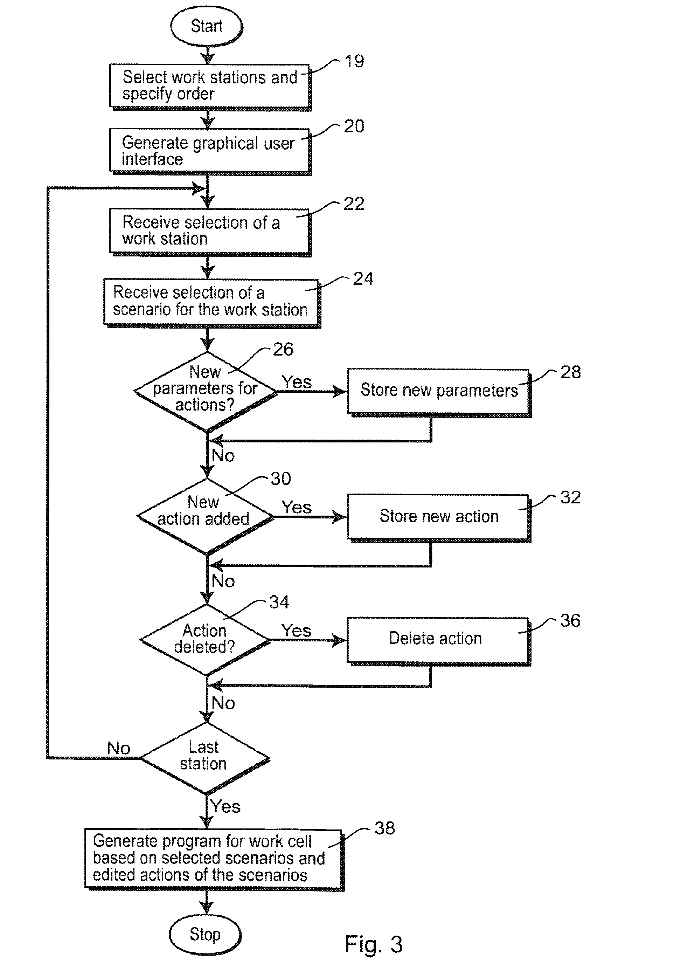

Figure 3 is a flow diagram illustrating a method and a computer program according to an embodiment of the present invention. It would be understood that each block of the flow diagram can be implemented by computer program instructions, which are executed by a central processing unit located in the teach pendant unit or on a central processor unit located in an external computer such as a personal computer. It is also presumed that a set of predefined workstations comprising preprogrammed robot code is stored in the library.

In this embodiment, the user specifies the work cycle by specifying the workstations, which are contained in the work cell and the order in which the workstation is to be visited by the robot during a cycle, block 19.

When the operator starts the programming, a graphical user interface is generated displaying graphical objects representing the workstations of the work cell. The graphical objects representing the workstations can be displayed and edited one at a time, or two or more of the workstations can be displayed in the same view. Information about the different scenarios is displayed together with the graphical objects of the workstation, block 20. It is also possible to expand the scenarios to view and edit the actions of the scenarios. If more than one workstation is displayed at the same time in the same view, the programmer selects one of the workstations, block 22. When the user has selected a workstation, the user selects one of the scenarios displayed together with the workstation and information about the selection made by the user is received and stored, block 24.

When the user has selected a scenario, the user can go on and expand the scenario to view the actions of the scenarios and to edit the default parameters of the action. If new parameters are received for the actions block 26, the new parameters are stored, block 28. The user may add new actions. If new actions are added, block 30 the modified scenario with the new actions is stored in the library, block 32. The user may also delete actions, block 34. If the user has deleted an action, the modified scenario is stored in the library, block 36. The steps 22-36 are repeated until the user has selected a scenario for each workstation for which there are more than one scenario to choose between, and the user is satisfied with the actions of the scenarios.

When the user is finished, the robot program generator automatically generates a robot program for the entire work cell based on the selected scenarios for the workstations and the edited actions of the scenarios, block 38.

The present invention is not limited to the embodiments disclosed but may be varied and modified within the scope of the following claims. For example, the library including the workstations and the preprogrammed code can be stored in the robot controller and accessible via the communication means 8. In another embodiment of the invention, the scenarios are not predefined with a sequence of actions. Instead, the user creates a scenario for a workstation by selecting a sequence of actions from a list of predefined actions. The list of predefined and selectable actions is displayed together with the graphical object of the workstation. For example, the list of selectable actions is displayed when the user makes a right click in an area in the vicinity of the graphical object of the workstation.

## Claims

1. An apparatus (1) for programming an industrial robot working in a work cell including one or more workstations and the robot is visiting and performing work on the workstations **characterized in that** the apparatus comprises:
- a memory location (2) for storing preprogrammed robot code comprising program instructions where accommodations for optional parameters are made, and for storing a plurality of predefined workstations, each workstation having a plurality of different scenarios defining different ways to perform work on the workstation, each scenario Including a set of parameters defining how the robot will perform work on the workstation,
- a graphical display and input device (3) adapted to present a graphical user interface displaying graphical objects representing the workstations, displaying information about the different scenarios together with the graphical objects representing the workstations and allowing the user to select, for each of the workstations, one of the scenarios associated with the workstation, and
- a robot program generator (4) adapted to generate a robot program based on user selected scenarios and the preprogrammed robot code.

2. The apparatus according to claim 1, wherein said preprogrammed robot code includes robot code for performing robot motions, and the scenarios include parameters defining the robot motion.

3. The apparatus according to claim 1 or 2, wherein said preprogrammed robot code includes robot code controlling the logics for the work to be performed, and the scenarios include parameters defining the logics.

4. The apparatus according to any of the previous claims, wherein said preprogrammed robot code includes robot code for operating a robot tool, and the scenarios include parameters defining the operation of the tool.

5. The apparatus according to any of the previous claims, wherein said preprogrammed robot code includes robot code for gathering process information and the scenarios include parameters defining how the gathering will be done.

6. The apparatus according to any of the previous claims, wherein said graphical user interface is adapted to display said set of parameters together with the scenario and to allow the user to edit the parameters.

7. The apparatus according to any of the previous claims, wherein each scenario contains a sequence of one or more default actions having default parameters related to how the action is to be carried out, and said graphical user interface displays an illustration of each action together with the scenario and said graphical user interface allows the user to edit the parameters of the actions.

8. The apparatus according to claim 7, wherein the graphical user interface allows the user to delete actions of a scenario and to add new actions to the scenario.

9. The apparatus according to claim 7 or 8, wherein said sequence of actions comprises at least one robot motion action including parameters defining a robot motion, and at least one of a tool action including parameters defining how a robot tool is to be used, a logic action including parameters defining logic for the work to be performed, and a calculation action including parameters for how calculations are to be performed.

10. The apparatus according to any of the previous claims, wherein the memory location (2) is adapted for storing a plurality of predefined workstations having a plurality of different scenarios, each scenario including a set of parameters defining how the robot will perform work on the workstation, and said graphical display and input device (3) is adapted to present graphical objects representing the workstations, displaying information about the scenarios together with the graphical object representing the workstation and allowing the user to select one of the scenarios associated with the workstation.

11. A method for programming an industrial robot working in a work cell including one or more workstations and the robot is visiting and performing work on the workstations, **characterized in that** the method comprises:
storing preprogrammed robot code comprising program instructions where accommodations for optional parameters are made,
storing a plurality of predefined workstations, each workstation having a plurality of different scenarios defining different ways to perform work on the workstation, each scenario including a set of parameters defining how the robot will perform work on the workstation,
generating a graphical user interface displaying graphical objects representing the workstations, displaying Information about the different scenarios together with the graphical objects representing the workstations and allowing the user to select, for each of the workstations, one of the scenarios associated with the workstation,
receiving information about which scenarios the user has selected, and
generating a robot program for the work cell based on user selected scenarios and the preprogrammed robot code.

12. The method according to claim 11, wherein said preprogrammed robot code includes robot code for performing robot motions, and the scenarios include parameters defining the robot motion.

13. The method according to claim 11 or 12, wherein said preprogrammed robot code includes robot code controlling the logics for the work to be performed, and the scenarios include parameters defining the logics.

14. The method according to any of the claims 11-13, wherein said preprogrammed robot code includes robot code for operating a robot tool, and the scenarios include parameters defining the operation of the tool.

15. The method according to any of the claims 11-14, wherein said set of parameters is displayed together with the scenario, said graphical user interface allows the user to edit the parameters, and the robot program is generated based on the edited parameters.

16. The method according any of the claims 11-15, wherein said preprogrammed robot code includes robot code for gathering process information and the scenarios include parameters defining how the gathering will be done.

17. The method according to any of the claims 11-16, wherein each scenario contains a sequence of one or more default actions having default parameters related to how the action is to be carried out, and said graphical user interface displays an illustration of each action together with the scenario and said graphical user interface allows the user to edit the parameters of the actions.

18. The method according to claim 17, wherein the graphical user interface allows the user to delete actions of a scenario and to add new actions to the scenario.

19. The method according to claim 17 or 18, wherein said sequence of actions comprises at least one robot motion action including parameters defining a robot motion, and at least one of a tool action including parameters defining how a robot tool is to be used, a logic action including parameters defining logic for the work to be performed, and a calculation action including parameters for how calculations are to be performed.

20. The method according to any of the claims 11-19, wherein a plurality of predefined workstation is storied having a plurality of different scenarios, each scenario including a set of parameters defining how the robot will perform work on the workstation, and said graphical user interface displays graphical objects representing the workstations, displays information about the scenarios together with the graphical object representing the workstation and allows the user to select one of the scenarios associated with the workstation.

21. A computer program product directly loadable into the internal memory of a computer, comprising software for performing the steps of any of the claims 11-20.

22. A computer-readable medium, having a program recorded thereon, where the program is to make a computer perform the steps of any of the claims 11-20, when said program is run on the computer.

## Patentansprüche

1. Eine Vorrichtung (1) zum Programmieren eines Industrieroboters, welcher in einer Arbeitszelle, umfassend eine oder mehrere Arbeitsstationen, arbeitet und der Roboter die Arbeitsstationen anfährt und Arbeiten durchführt,
**dadurch gekennzeichnet,**
**dass** die Vorrichtung:
- einen Speicherort (2) zum Speichern von vorprogrammiertem Robotercode, umfassend Programmanweisungen, wie Einstellungen für optionale Parameter gemacht werden, und zum Speichern einer Vielzahl von vordefinierten Arbeitsstationen, wobei jede Arbeitsstation eine Vielzahl von unterschiedlichen Szenarien besitzt, die die unterschiedlichen Verfahren, Arbeit an den Arbeitsstationen zu verrichten, definieren, wobei jedes Szenario einen Satz von Parametern beinhaltet, die definieren, wie der Roboter die Arbeit an der Arbeitsstation durchführen wird,
- eine grafische Anzeige und ein Eingabegerät (3) dazu verwendet eine grafische Benutzeroberfläche anzuzeigen, welche die Arbeitsstationen repräsentierende grafische Objekte anzeigt, die Informationen über die unterschiedlichen Szenarien zusammen mit den die Arbeitsstation repräsentierenden grafischen Objekten darstellt und dem Benutzer erlaubt, für jede der Arbeitsstationen eine der Szenarien, verknüpft mit der Arbeitsstation, auszuwählen, und
- ein Roboterprogrammgenerator (4) dazu verwendet ein Roboterprogramm basierend auf den vom Benutzer ausgewählten Szenarien und dem vorprogrammierten Robotercode zu generieren.

2. Eine Vorrichtung nach Anspruch 1, wobei der besagte vorprogrammierte Robotercode einen Robotercode zum Durchführen von Roboterbewegungen beinhaltet und Szenarienparameter zur Bestimmung von Roboterbewegungen umfasst.

3. Eine Vorrichtung nach Anspruch 1 oder 2, wobei besagter vorprogrammierter Robotercode einen Robotercode zur Kontrolle der Logik der durchzuführenden Arbeit umfasst, und Szenarienparameter zur Bestimmung der Logik beinhaltet.

4. Eine Vorrichtung nach einem der vorherigen Ansprüche, wobei besagter vorprogrammierter Robotercode einen Robotercode zur Handhabung eines Roboterwerkzeuges umfasst und Szenarienparameter zur Bestimmung, der Handhabung des Werkzeuges beinhaltet.

5. Eine Vorrichtung nach einem der vorherigen Ansprüche, wobei besagter vorprogrammierter Robotercode einen Robotercode zum Sammeln von Vorgangesinformationen umfasst und Szenarienparameter zur Bestimmung, wie das Sammeln durchgeführt wird, beinhaltet.

6. Eine Vorrichtung nach einem der vorherigen Ansprüche, wobei besagte grafische Benutzeroberfläche daran angepasst ist, besagten Satz von Parametern zusammen mit dem Szenario anzuzeigen und es dem Benutzer zu ermöglichen, die Parameter zu ändern.

7. Eine Vorrichtung nach einem der vorherigen Ansprüche, wobei jedes Szenario eine Folge von einer oder mehreren Standartaktionen umfasst, welche einen Standartparameter bezüglich, wie die Aktion durchzuführen ist, beinhaltet und besagte grafische Benutzeroberfläche eine illustration einer jeden Aktion zusammen mit dem Szenario anzeigt und besagte grafische Benutzeroberfläche es dem Benutzer erlaubt, die Parameter der Aktion zu verändern.

8. Eine Vorrichtung nach Anspruch 7, wobei die grafische Benutzeroberfläche es dem Benutzer erlaubt, Aktionen aus einem Szenario zu löschen und neue Aktionen zu einem Szenario hinzuzufügen.

9. Eine Vorrichtung nach Anspruch 7 oder 8, wobei besagte Abfolge von Aktionen zumindest eine Roboterbewegungsaktion, welche Parameter zur Definition der Roboterbewegung beinhaltet, und zumindest eine der Werkzeugaktionen, welche Parameter zur Definition, wie ein Roboterwerkzeug zu benutzen ist, beinhaltet, eine logische Aktion, welche Parameter zur Bestimmung der Logik für eine durchzuführende Arbeit beinhaltet, und eine Berechnungsaktion, welche Parameter bezüglich wie die Kalkulation durchgeführt werden muss beinhaltet, umfasst.

10. Eine Vorrichtung nach einem der voranstehenden Ansprüche, wobei der Speicherort (2) daran angepasst ist, eine Vielzahl von vordefinierten Arbeitsstationen zu speichern, weiche eine Vielzahl von unterschiedlichen Szenarien besitzen, wobei jedes Szenario einen Satz von Parametern zur Bestimmung, wie der Roboter die Arbeit an der Arbeitsstation durchführt, beinhaltet, und besagte grafische Anzeige und Eingabegerät (3) daran angepasst sind, die Arbeitsstationen repräsentierenden grafische Objekte und die information über die Szenarien zusammen mit den die Arbeitsstationen repräsentierenden grafischen Objekten anzuzeigen und es dem Benutzer zu erlauben, eine der Szenarien, verknüpft mit den Arbeitsstationen, auszuwählen.

11. Ein Verfahren zum Programmieren eines industrieroboters, der in einer Arbeitszelle, umfassend eine oder mehrere Arbeitsstationen, arbeitet und der Roboter die Arbeitsstationen anfährt und Arbeiten durchführt,
**dadurch gekennzeichnet,**
**dass** das Verfahren:
a. das Speichern eines vorprogrammierten Robotercode, umfassend Programmweisungen, wie Einstellungen für optional Parameter gemacht werden,
b. das Speichern einer Vielzahl von vordefinierten Arbeitsstationen, wobei jede Arbeitsstation eine Vielzahl von unterschiedlichen Szenarien zur Bestimmung unterschiedlicher Weisen, wie eine Arbeit an einer Arbeitsstation durchzuführen ist, besitzt, wobei jedes Szenario einen Satz von Parametern zur Bestimmung wie der Roboter die Arbeit an der Arbeitsstation durchführen wird, beinhaltet,
c. das Erstellen einer grafischen Benutzeroberfläche, welche die Arbeitsstationen repräsentierenden grafischen Objekte anzeigt, welche Informationen über die unterschiedlichen Szenarien zusammen mit den die Arbeitsstationen repräsentierenden grafischen Objekten anzeigt und es dem Benutzer erlaubt für jede der Arbeitsstationen eines der Szenarien, verbunden mit der Arbeitsstationen, auszuwählen,
d. das Erhalten von Informationen darüber, welches Szenario der Benutzer ausgewählt hat, und
e. das Erstellen eines Roboterprogramms für die Arbeitszelle basierend auf die vom Benutzer ausgewählten Szenarien und dem vorprogrammierten Robotercode umfasst.

12. Ein Vorfahren nach Anspruch 11, wobei besagter vorprogrammierter Robotercode einen Robotercode zum Durchführen von Roboterbewegungen beinhaltet, und Szenarienparameter zur Bestimmung der Roboterbewegung umfasst,

13. Ein Verfahren nach Anspruch 11 oder 12, wobei besagter vorprogrammierter Robotercode einen Robotercode zum Kontrollieren der Logik der durchzuführenden Arbeit umfasst, und Szenarienparameter zur Bestimmung der Logik beinhaltet.

14. Ein Verfahren nach einem der Ansprüche 11 bis 13, wobei besagter vorprogrammierter Robotercode einen Robotercode zur Handhabung eines Roboterwerkzeugs umfasst und Szenarienparameter zur Bestimmung der Handhabung des Werkzeuges beinhaltet.

15. Ein Verfahren nach einem der Ansprüche 1 bis 14, wobei besagter Satz von Parametern zusammen mit dem Szenario angezeigt wird, wobei es die besagte grafische Benutzeroberfläche es dem Benutzer erlaubt, die Parameter zu ändern und das Roboterprogramm erzeugt wird, basierend auf den veränderten Parametern.

16. Ein Verfahren nach einem der Ansprüche 11 bis 15, wobei besagter vorprogrammierter Robotercode einen Robotercode zum Sammeln von Prozessinformationen umfasst und Szenarienparameter zur Bestimmung, wie das Sammeln durchgeführt wird, beinhaltet.

17. Ein Verfahren nach einem der Ansprüche 11 bis 16, wobei jedes Szenario eine Abfolge von einem oder mehreren Standardaktionen umfasst, welche Standardparameter bezogen auf die durchzuführenden Aktion, beinhaltet und besagte grafische Benutzeroberfläche eine Illustration einer jeden Aktion zusammen mit dem Szenario anzeigt und besagte grafische Benutzeroberfläche es dem Benutzer erlaubt, die Parameter der Aktion zu verändern.

18. Ein Verfahren nach Anspruch 17, wobei die grafische Benutzeroberfläche es dem Benutzer erlaubt, Aktionen aus dem Szenario zu löschen und neue Aktionen dem Szenario hinzuzufügen.

19. Ein Verfahren nach einem der Ansprüche 17 oder 18, wobei besagte Abfolge von Aktionen zumindest eine Roboterbewegungsaktion zusammen mit Parametern zur Roboterbewegung umfasst, und zumindest eine der Werkzeugaktionen zusammen mit Parametern zur Bestimmung, wie das Roboterwerkzeug benutzt werden muss, eine logische Aktion zusammen mit Parametern zur Bestimmung der Logik zur Durchführung der Arbeit und eine Berechnungsaktion zusammen mit Parametern bezüglich, wie die Berechnung durchzuführen ist, umfasst.

20. Ein Verfahren nach einem der Ansprüche 11 bis 19, wobei eine Vielzahl von vordefinierten Arbeitsstationen gespeichert ist, die eine Vielzahl von unterschildlichsten Szenarien beinhalten, wobei jedes Szenario einen Satz von Parametern zur Bestimmung, wie der Roboter die Arbeit an der Arbeitsstation durchführen wird, beinhaltet, und besagte grafische Benutzeroberfläche die Arbeitsstation repräsentierenden grafischen Objekte anzeigt, und Informationen über die Szenarien zusammen mit den die Arbeitsstationen repräsentierenden grafischen Objekten anzeigt und es dem Benutzer erlaubt, eine der mit der Arbeitsstation verknüpften Szenarien auszuwählen.

21. Ein Computerprogrammprodukt, welches direkt in den internen Speicher eines Computers geladen werden kann und Software zum Durchführen der Schritte nach einem der Ansprüche 11 bis 20 umfasst.

22. Ein computerlesbares Medium, welches ein Programm darauf gespeichert hat, wobei das Programm dazu dient, einen Computer einen der Schritte nach einem der Ansprüche 11 bis 20 durchzuführen, wenn besagtes Programm auf dem Computer läuft.

## Revendications

1. Dispositif (1) destiné à programmer un robot industriel exécuté dans une cellule de travail comportant un ou plusieurs postes de travail et dans lequel le robot examine et exécute des tâches sur les postes de travail, **caractérisé en ce que** le dispositif comprend :
- un emplacement de mémoire (2) pour stocker un code de robot préprogrammé comprenant des instructions de programme où des complaisances pour les paramètres optionnels sont réalisées, et pour stocker une pluralité de postes de travail prédéfinis, chaque poste de travail présentant une pluralité de scénarios distincts définissant différentes façons pour mettre en oeuvre une tâche sur le poste de travail, chaque scénario comportant un ensemble de paramètres définissant la façon dont le robot mettra en oeuvre une tâche sur le poste de travail ;
- un dispositif de saisie et d'affichage graphique (3) apte à présenter une interface utilisateur graphique affichant des objets graphiques représentant les postes de travail, affichant des informations sur les différents scénarios avec les objets graphiques représentant les postes de travail, et permettant à l'utilisateur de sélectionner, pour chacun des postes de travail, l'un des scénarios associés au poste de travail ; et
- un générateur de programme de robot (4) apte à générer un programme de robot sur la base de scénarios sélectionnés par l'utilisateur et du code de robot préprogrammé.

2. Dispositif selon la revendication 1, dans lequel ledit code de robot préprogrammé comprend un code de robot destiné à mettre en oeuvre des mouvements de robot, et dans lequel les scénarios incluent des paramètres définissant le mouvement de robot.

3. Dispositif selon la revendication 1 ou 2, dans lequel ledit code de robot préprogrammé inclut un code de robot commandant la logique pour la tâche à mettre en oeuvre, et dans lequel les scénarios comprennent des paramètres définissant les logiques.

4. Dispositif selon l'une quelconque des revendications précédentes, dans lequel ledit code de robot préprogrammé inclut un code de robot destiné à exploiter un outil de robot, et les scénarios incluent des paramètres définissant l'opération de l'outil.

5. Dispositif selon l'une quelconque des revendications précédentes, dans lequel ledit code de robot préprogrammé comprend un code de robot pour collecter des informations de traitement, et les scénarios incluent des paramètres définissant la manière dont la collecte sera mise en oeuvre.

6. Dispositif selon l'une quelconque des revendications précédentes, dans lequel ladite interface utilisateur graphique est apte à afficher ledit ensemble de paramètres avec le scénario et à permettre à l'utilisateur de modifier les paramètres.

7. Dispositif selon l'une quelconque des revendications précédentes, dans lequel chaque scénario contient une séquence d'une ou plusieurs actions par défaut présentant des paramètre par défaut connexes à la façon dont l'action doit être mise en oeuvre, et ladite interface utilisateur graphique affiche une illustration de chaque action avec le scénario, et ladite interface utilisateur graphique permet à l'utilisateur de modifier les paramètres des actions.

8. Dispositif selon la revendication 7, dans lequel l'interface utilisateur graphique permet à l'utilisateur de supprimer des actions d'un scénario et d'ajouter de nouvelles actions au scénario.

9. Dispositif selon la revendication 7 ou 8, dans lequel ladite séquence d'actions comporte au moins une action de mouvement de robot comportant des paramètres définissant un mouvement de robot, et au moins l'une des actions parmi : une action d'outil comportant des paramètres définissant la façon dont un outil de robot doit être utilisé ; une action de logique comportant des paramètres définissant une logique connexe à la tâche à mettre en oeuvre, et une action de calcul comportant des paramètres indiquant la façon dont les calculs doivent être mis en oeuvre.

10. Dispositif selon l'une quelconque des revendications précédentes, dans lequel l'emplacement de mémoire (2) est apte à stocker une pluralité de postes de travail prédéfinis présentant une pluralité de scénarios distincts, chaque scénario comportant un ensemble de paramètres définissant la façon dont le robot mettra en oeuvre une tâche sur le poste de travail, et ledit dispositif de saisie et d'affichage graphique (3) est apte à présenter des objets graphiques représentant les postes de travail, à afficher des informations sur les scénarios avec l'objet graphique représentant le poste de travail et à permettre à l'utilisateur de sélectionner l'un des scénarios associés au poste de travail.

11. Procédé destiné à programmer un robot industriel exécuté dans une cellule de travail comportant un ou plusieurs postes de travail, et dans lequel le robot examine et exécute des tâches sur les postes de travail, **caractérisé en ce que** le procédé comprend les étapes ci-dessous consistant à :
stocker un code de robot préprogrammé comprenant des instructions de programme où des complaisances pour les paramètres optionnels sont réalisées ;
stocker une pluralité de postes de travail prédéfinis, chaque poste de travail présentant une pluralité de scénarios distincts définissant différentes façons pour mettre en oeuvre une tâche sur le poste de travail, chaque scénario comportant un ensemble de paramètres définissant la façon dont le robot mettra en oeuvre une tâche sur le poste de travail ;
générer une interface utilisateur graphique affichant des objets graphiques représentant les postes de travail, affichant des informations sur les différents scénarios avec les objets graphiques représentant les postes de travail, et permettant à l'utilisateur de sélectionner, pour chacun des postes de travail, l'un des scénarios associés au poste de travail ;
recevoir des informations sur les scénarios que l'utilisateur a sélectionnés ; et
générer un programme de robot pour la cellule de travail sur la base des scénarios sélectionnés par l'utilisateur et du code de robot préprogrammé.

12. Procédé selon la revendication 11, dans lequel ledit code de robot préprogrammé comprend un code de robot destiné à mettre en oeuvre des mouvements de robot, et dans lequel les scénarios incluent des paramètres définissant le mouvement de robot.

13. Procédé selon la revendication 11 ou 12, dans lequel ledit code de robot préprogrammé inclut une code de robot commandant la logique pour la tâche à mettre en oeuvre, et dans lequel les scénarios comprennent des paramètres définissant les logiques.

14. Procédé selon l'une quelconque des revendications 11 à 13, dans lequel ledit code de robot préprogrammé inclut un code de robot destiné à exploiter un outil de robot, et les scénarios incluent des paramètres définissant l'opération de l'outil.

15. Procédé selon l'une quelconque des revendications 11 à 14, dans lequel ledit ensemble de paramètres est affiché avec le scénario, ladite interface utilisateur graphique permet à l'utilisateur de modifier les paramètres, et le programme de robot est généré sur la base des paramètres modifiés.

16. Procédé selon l'une quelconque des revendications 11 à 15, dans lequel ledit code de robot préprogrammé comprend un code de robot pour collecter des informations de traitement, et les scénarios incluent des paramètres définissant la manière dont la collecte sera mise en oeuvre.

17. Procédé selon l'une quelconque des revendications 11 à 16, dans lequel chaque scénario contient une séquence d'une ou plusieurs actions par défaut présentant des paramètres par défaut connexes à la façon dont l'action doit être mise en oeuvre, et ladite interface utilisateur graphique affiche une illustration de chaque action avec le scénario, et ladite interface utilisateur graphique permet à l'utilisateur de modifier les paramètres des actions.

18. Procédé selon la revendication 17, dans lequel l'interface utilisateur graphique permet à l'utilisateur de supprimer des actions d'un scénario et d'ajouter de nouvelles actions au scénario.

19. Procédé selon la revendication 17 ou 18, dans lequel ladite séquence d'actions comporte au moins une action de mouvement de robot comportant des paramètres définissant un mouvement de robot, et au moins l'une des actions parmi : une action d'outil comportant des paramètres définissant la façon dont une outil de robot doit être utilisé ; une action de logique comportant des paramètres définissant une logique connexe à la tâche à mettre en oeuvre, et une action de calcul comportant des paramètres indiquant la façon dont les calculs doivent être mis en oeuvre.

20. Procédé selon l'une quelconque des revendications 11 à 19, dans lequel une pluralité de postes de travail prédéfinis est stockée et présente une pluralité de différents scénarios, chaque scénario comportant un ensemble de paramètres définissant la façon dont le robot mettra en oeuvre une tâche sur le poste de travail, et ladite interface utilisateur graphique affiche des objets graphiques représentant les postes de travail, affiche des informations sur les scénarios avec l'objet graphique représentant le poste de travail et permet à l'utilisateur de sélectionner l'un des scénarios associés au poste de travail.

21. Produit-programme informatique pouvant être chargé directement dans la mémoire interne d'un ordinateur, comprenant un logiciel pour mettre en oeuvre les étapes selon l'une quelconque des revendications 11 à 20.

22. Support lisible par un ordinateur, présentant un programme enregistré dans celui-ci, où le programme amène un ordinateur à mettre en oeuvre les étapes selon l'une quelconque des revendications 11 à 20, lorsque ledit programme est exécuté sur l'ordinateur.
